**Europäisches Patentamt**

**European Patent Office**

**Office européen des brevets**

(19)

(11) Publication number : **0 494 902 B1**

(12) # EUROPEAN PATENT SPECIFICATION

(45) Date of publication of patent specification :
24.11.93 Bulletin 93/47

(51) Int. Cl.⁵ : **A23G 3/30**

(21) Application number : **90914514.6**

(22) Date of filing : **12.09.90**

(86) International application number :
**PCT/DK90/00234**

(87) International publication number :
**WO 91/03945 04.04.91 Gazette 91/08**

(54) **PROCESS FOR THE PREPARATION OF GUM BASE FOR CHEWING GUM AND A PRODUCT PREPARED BY THE PROCESS.**

The file contains technical information
submitted after the application was filed and
not included in this specification

(30) Priority : **22.09.89 DK 4689/89**

(43) Date of publication of application :
**22.07.92 Bulletin 92/30**

(45) Publication of the grant of the patent :
**24.11.93 Bulletin 93/47**

(84) Designated Contracting States :
**AT BE CH DE ES FR GB IT LI LU NL SE**

(56) References cited :
**WO-A-89/05590**
**WO-A-90/06689**
**AU-B- 500 229**
**DK-A- 71 829**
**US-A- 4 824 680**

(73) Proprietor : **VECATA A/S**
**DANDYVEJ 1**
**DK-7100 Vejle (DK)**

(72) Inventor : **NIELSEN, Hans, Erik**
**Skolesvinget 31**
**DK-8700 Horsens (DK)**

(74) Representative : **Zeuthen-Aagaard, Henrik et al**
**Chas. Hude, 33 H.C. Andersens Boulevard**
**DK-1553 Copenhagen V (DK)**

EP 0 494 902 B1

Jouve, 18, rue Saint-Denis, 75001 PARIS

## Description

Technical Field

The present invention relates to a process for the preparation of gum base for chewing gum on the basis of two or more of the ingredients elastomer, plasticizer, softener and filler and optionally various auxiliary agents. The invention furthermore relates to the use of gum base for the preparation of chewing gum.

Background Art

Chewing gum comprises a water-insoluble portion, the gum base, which remains in the oral cavity and a watersoluble portion which is dissolved during the chewing. Aroma and sweetness are primarily provided by the watersoluble portion while organoleptic properties such as structure, elasticity, film forming capacity, tackiness, softness etc are ususally provided by the gum base portion. To obtain the desired properties in a chewing gum product the gum base is prepared from ingredients selected on the basis of their special organoleptic properties, their workability, their compatibility and their storability. It should be emphasized that in the present text the expression gum base designates both gum bases per se and the so-called gum base master batches, that is prefabricated gum bases or precursors of gum bases.

Gum base conventionally comprises four main ingredients: elastomer, platicizer, softener and filler and optionally additional auxiliary agents.

The elastomer is a very important ingredient of the gum base, as it determines the elastic properties of the chewing gum. The elastomer is usually a type of gum. Regardless of the origin, the elastomer provides the gum base and thereby the chewing gum with such elasticity as to recover from the deformation caused by chewing.

A plasticizer is used in the gum base in order to provide the gum base with a certain plasticity to prevent it from recovering from the deformation too quickly, which would feel like chewing a rubber band. Said plasticizer is usually a resin of either natural or synthetic origin.

The mixture of elastomer and plasticizer impart elasticity and plasticity to the gum base, but the base is still very hard, stiff and brittle. Therefore, it is necessary to soften the base. A softener, usually a type of wax, is used for this purpose.

The above gum base ingredients are among other things characterised in that they are not easily intermixable. This especially applies to the elastomer as its interior mobility between the polymer chains differs completely from the other gum base ingredients. Both elastomers and polymeric resins have a characteristic intensity of intermolecular interaction called the cohesive energy density which usually, to some extent, must be overcome to obtain a homogenous mass.

To overcome the problems of miscibility it has proved necessary in most cases to affect the polymers thermically and mechanically. Fillers are conventionally used for this purpose, said fillers increasing the friction during the mixing, thereby accelerating the mixing process. Furthermore, fillers also influence the aroma release of the chewing gum.

Various processes for the preparation of chewing gum base are known. For instance, US Patent No 4,187,320 discloses a two-stage process for the preparation of chewing gum base using a solid elastomer by which process the solid elastomer is firstly subjected to high intensity mixing under high shear conditions to masticate the solid substance to obtain a substantially uniform, lumpfree mass followed by a step-wise addition of an elastomer solvent and an oleaginous plasticizer during continued high intensity mixing until a substantially molten uniform mass is obtained. The second step of the process comprises the step-wise addition by decreasing order of viscocity of the remaining chewing gum base ingredients such as a non-toxic vinyl polymer, a hydrophobic plasticizer, additional oleaginous plasticizer and an emulsifier during continued high intensity mixing. As a result of the dilution of the elastomer in step 1 being rather modest, the product of step 1 thereby being rather highly viscous, many portionwise additions are necessary in step 2. The process is therefore very time-consuming. Furthermore an extensive depolymerisation of the elastomer may take place.

US patent No. 3,995,064 discloses a process for the preparation of a chewing gum base by mixing elastomer and elastomer solvent under high shear conditions, whereupon hydrophobic plasticizer and hydrophilic plasticizer are added under reduced shear conditions, followed by mixing this material with an oleaginous plasticizer and an emulsifier to form a chewing gum base. This process is also time-consuming and requires many portion-wise additions which make the process extremely labour and equipment intensive and give rise to potential errors.

Furthermore, US patent No. 4,329,369 discloses a single-step process for the preparation of chewing gum in which all materials, including gum base ingredients and all chewing gum additives are charged into a single apparatus and kneaded simultaneously in a single step until a thorough mixing is obtained. The process is encumbered with the drawback that the mixing apparatus is economically demanding and requires extensive cooling of the mixing chamber to keep the temperature of the chewing gum mass under control. Furthermore, dispersing and depolymerisation problems with the elastomer may arise.

DK application No. 2307/84 discloses a process for the preparation of a chewing gum base wherein a filler and the hard elastomer are mixed before being mixed with a softener. The softened mixture is then subjected to high shear conditions to open the elastomer before the remaining gum base ingredients are added. The above process is encumbered with the drawback that the high shear conditions do not only open the elastomer but also cause an extensive depolymerisation.

US Patent no. 4,806,364 discloses a process for the preparation of a matrix of sweetening agents to which gum base particles are added. Said addition of gum base to a matrix of sweetening agents is stated as being reverse practice compared to prior art. As a traditionally prepared gum base is used, the depolymerisation of the elastomer must, however, be expected to be as extensive as in traditional preparation of chewing gum.

US patent No. 2,036,577 discloses a process for the purification and mixing of elastomer in the form of natural latex gum and plasticizer in the form of natural gum resin for the preparation of a resinous material suitable for use in a chewing gum base. The process is carried out by melting the gum resin in an aqueous solution of caustic soda followed by the addition of a natural latex gum. The drawback of this method is the use of an aqueous solution of caustic soda, which must be assumed to affect the properties of the elastomer and to be unpleasant to work with.

The present technology for the preparation of gum base is based on starting with the ingredient having the highest molecular weight, which is the elastomer, and slowly diluting it, usually with a plasticizer at first. However, as mentioned above, this process is very time-consuming as great differences in viscosity exist between the two ingredients. The process is therefore very critical at the start as very small dosages are required and as it takes very long time for the plasticizer to be incorporated, it being necessary to be certain that the small quantity of plasticizer has been dissolved uniformly in the elastomer before adding the next dosage.

A too large dosage results in a liquid phase in the form of liquid plasticizer with floating lumps of the highly viscous elastomer, whereby all mechanical work in the mixer is lost. The mixing time may thereby be extended by up to several hours. As the floating plasticizer is dissolved in the elastomer, the mechanical friction gradually increases again because the viscosity of the mass increases and the mixing arms are again able to draw the mass. The differences in viscosity are then slowly equalized and the mass becomes homogenous.

The extensive mechanical friction causes, however, at the same time an extensive mechanical decomposition or depolymerisation of the elastomer. The term mechanical decomposition denotes decomposition caused by the forces to which the elastomer is subjected during the processing. When subjected to said forces the molecular chains of the elastomer are simply torn across, whereby one or more molecular chains with a lower molecular weight than the original molecular chain are formed. This decomposition is also called mastication.

In a conventional gum base preparation, carried out in a conventional mixer in the form of a kettle with built-in sigma mixing wings or another type of mixing wings and heated to about 130°C by means of steam, oil or electricity, an average of 65-70% of the original elastomer quantity will be decomposed to molecular chains of a lower molecular weight.

Disclosure of Invention

However, it has now been found that it is possible to prepare gum bases for chewing gum by means of a procees which can be carried out very quickly and which is gentle to the elastomer, in that the above decomposition or depolymerisation of the elastomer is avoided or substantially reduced.

The present invention therefore relates to a process of the above type characterised by

1) melting the softener by heating to a temperature in the range of 80 to 130°C,

2) adding elastomer and optionally additional gum base ingredients to the melted softener ingredient, and

3) subjecting the resulting material to high intensity mixing under high shear conditions in a planet mixer, whereupon additional gum base ingredients in solid or melted form are optionally added under continued high shear conditions.

By employing said process for the preparation of gum bases a substantially reduced preparation time is obtained as the mixture of the individual gum base ingredients takes place very intensively and effectively. Furthermore, the process is very gentle to the elastomer ingredient, only about 30 to 50% of the elastomer quantity being decomposed to form compounds with lower molecular weight. According to the latest tests, even better results are obtained as no decomposition of the elastomer quantity is observed at all. This is because the extremely powerful mechanical effect on the elastomer in the beginning of the mixing process in conventional preparation is avoided as the elastomer is already dissolved in the low viscous ingredient. As a consequence of the less extensive elastomer depolymerisation, it is possible to prepare chewing gum with a more lively, elastic and resilient consistency. At the same time, it has surprisingly been found that the aroma release is more juicy or succulent and of longer duration, cf. the below examples.

In a particular embodiment of the process according to the invention the elastomer is softened by heating to a temperature in the range of 75 to 150°C before being added to the molten softener ingredient. As a result the dissolution takes place more rapidly as the mobility of the individual molecules is increased, whereby they are easierly being admixed in the surrounding medium.

The mixing carried out in step 3 of the process according to the invention takes place in a planet mixer, particularly preferred in an appartus of the dissolver type. Said apparatus, which comprises two circular dissolver discs, a kneading tool and a peripheral scraper, is known from the paint and lacquer industry but has surprisingly been found to be extremely suitable for the preparation of gum bases. An example of a preferred apparatus to be used when carrying out the inventive process is the GF-Planetendissolver, type VPLD8, available from Grieser and Faulhaber, Lampertheim, the German Federal Republic. The dissolver discs preferably work at a speed of about 500 to 6000 r.p.m., the kneading tool at a speed of about 30 to 200 r.p.m. and the peripheral scraper at a speed of about 15 to 100 r.p.m.. At the same time, the apparatus can be provided with commonly known heating and cooling means and with vacuum and/or an inert gas, such as nitrogen, to be used in connection with especially sensitive elastomer types. This is a great advantage in connection with the preparation of gum base as the raw materials conventionally used for this purpose are rather sensitive to for instance high temperatures and atmospheric air.

The elastomeric ingredient of the gum base is preferably selected among hevea brasiliensis, polyisobutylene, isoprene-isobutylene copolymer, styrene-butadiene-copolymer, chicle, jelutong, sorva, sorvinha, niger gutta, gutta hang kang and masseranduba balata. Before being added to the melted softener ingredient the elastomer is divided into a particle size preferably not exceeding 25 mm, most preferably not exceeding about 12 mm. If desired, a powdering agent, such as for instance calcium carbonate or talc may be added to prevent adhesion.

The softener ingredient is preferably selected among rice bran wax, micro-crystalline wax, paraffin wax, bees' wax, candelilla wax, polyethylene wax, synthetic paraffin wax, petroleum wax, lanolin, pork fat, suet, raw/partially/completely hydrogenated soya bean oil, coconut oil, palm oil, rape seed oil, peanut oil, shea seed oil, corn oil (maize oil), cotton seed oil, sunflower oil, mono/diglycerides, esterified mono/diglycerides, sugar esters and triacetin.

The plasticizer is preferably selected among glycerol esters of partially hydrogenated wood or gum rosin, of partially dimerised rosin or of polymerised rosin or of wood, gum or tall oil rosin, methyl esters of partially hydrogenated rosin, pentaerytritol esters of partially hydrogenated wood or gum rosin, pentaerythritol esters of gum or wood rosin, terpene resin containing $\alpha/\beta$-pinene and/or dipentene, terpene resin containing delta limonene and polyvinyl acetate resins having a molecular weight of at least 2000, polyvinyl alcohol, vinyl acetate and vinyl laurate copolymer.

If a filler is used in the gum base, said filler is preferably selected among calcium carbonate, talc, kaolin, aluminum oxide and silicium oxide.

If required, the gum base may comprise different auxiliary agents, said auxiliary agents preferably being selected among antioxidants, such as butyl hydroxyanisole, butylhydroxytoluene, propyl gallate and tocopherols, inorganic or organic colourants and sodium stearate, potassium stearate and sodium sulphide.

The gum base preferably include about 2 to 30 weight% elastomer, about 5 to 75 weight% plasticizer, about 4 to 65 weight% softener, about 0 to 60 weight% filler and about 0 to 20 weight% auxiliary agent.

Furthermore, the invention relates to the use of gum base for the preparation of chewing gum, wherein the chewing gum is prepared in a planet mixer by mixing the gum base with usual chewing gum ingredients, such as one or more sweetening agents, flavorings and optionally additional chewing gum ingredients. A very short duration of preparation of the chewing gum is thereby obtained as well as a more gentle processing of the chewing gum ingredients than by the prior art methods. The short duration of preparation means that the finished chewing gum obtains a more elastic consistency and that the aroma release takes place faster and with greater intensity as regards taste, and juicyness as well as freshness.

The further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## Brief Description of Drawings

The invention is described in more details below with reference to the accompanying drawing in which

Fig. 1 is a diagrammatic view of a preferred planet mixer or dissolver to be used when carrying out the process according to the invention, and

Fig. 2 illustrates a taste profile in the initial/intermediate phase for a sugar-containing piece of chewing gum comprising a gum base prepared according to prior art,

Fig. 3 illustrates a taste profile in the initial/intermediate phase for a sugar-containing piece of chewing gum comprising a gum base prepared according to the invention,

Fig. 4 illustrates a taste profile in the end phase for a sugar-containing piece of chewing gum prepared according to prior art,

Fig. 5 illustrates a taste profile in the end phase for a sugar-containing piece of chewing gum prepared according to the invention,

Fig. 6 illustrates a taste profile in the initial/intermediate phase for a sugarless piece of chewing gum comprising a gum base prepared according to prior art.

Fig. 7 illustrates a taste profile in the initial/intermediate phase for a sugarless piece of chewing gum comprising a gum base prepared according to the invention,

Fig. 8 illustrates a taste profile in the end phase for a sugarless piece of chewing gum comprising a gum base prepared according to prior art technique, and

Fig. 9 illustrates a taste profile in the end phase for a sugarless piece of chewing gum comprising a gum base prepared according to the invention.

## Best Mode for Carrying Out the Invention

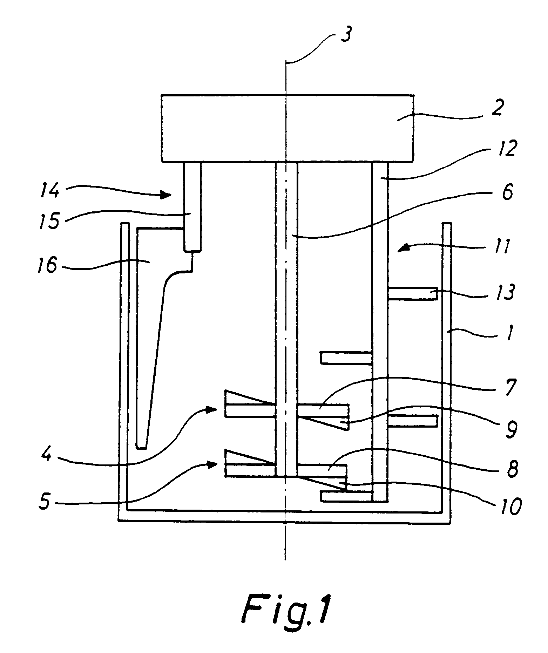

The planet mixer shown diagrammatically in Fig. 1 comprises a container 1, containing the materials forming part of the gum base, and two sets of tools for processing of the materials. The tools are connected to a gear box 2, which contains a sun and planet gear and is driven by means of a motor not shown.

The first set of tools comprises two stirrers 4, 5, placed diametrically opposite each other in relation to the central axis 3 of the container, said agitators each comprising a shaft 6 connected to the gear box at its upper end and provided with a stirring disc 7, 8, a so-called dissolver disc with blades 9, 10, at its lower and. The dissolver discs 7, 8 of the two stirrers 4, 5 are placed in different levels of the container 1 and the stirrers are adapted to rotate both about their axis and about the central axis 3 of the container.

The other set of tools comprises a kneading tool 11 adapted to rotate about its own axis and about the central axis of the container, said kneading tool 11 comprising a vertical shaft 12 with radially extending wings 13 and a peripheral scraper 14, said peripheral scraper 14 comprising an shaft 15 and a scraper plate 16 extending radially therefrom, said scraper plate 16 being adapted to be moved peripherically along the container thereby trans- porting the material from the container periphery and into the working area of the other tools.

The invention is illustrated further below by means of the following examples.

## Example 1

## Preparation of gum base master batch

A so-called gum base master batch (that is a prefabricated gum base) is prepared by use of the below ingredients:

| Ingredient | Quantity/g | Composition in percentages |
|---|---|---|
| Polyisobutylene | 1050 | 21% |
| Terpene resin | 1750 | 35% |
| Micro-crystalline wax | 2200 | 44% |
| Total | 5000 | 100% |

5

The elastomer polyisobutylene is divided into a particle size not exceeding 12 mm. The wax is melted and kept fluid at 100°C under nitrogen until use.

The container for the dissolver is heated to 120°C and the molten micro-crystalline wax is added. Subsequently, the finely divided elastomer is added and finally the resin is added. The mixing tools are then lowered into the container and the air is removed from the mixing chamber by means of a vacuum pump. The motor is activated and the mixing process started. In the beginning the product will have a very low viscosity like the molten micro-crystalline wax, but as the resin melts and the elastomer is dissolved the viscosity will gradually increase. After three hours of mixing a homogenous result is obtained. The end product has a temperature of 168°C. The master batch is then discharged and may either be used directly for the preparation of gum base in a fluid form or it may be cooled and used for the preparation of gum base on the basis of the master batch at a later time.

A master batch prepared as described above displays the following typical viscosity data compared to a master batch prepared according to the prior art:

```
Master batch prepared on dissolver:              500-800 Pa.s


Master batch prepared on conventional
mixer with sigma blades :                        110-300 Pa.s
```

The above analytic data have been measured on a Brookfield viscosimeter type RVT at 110°C with a 15 g sample, spindle 29, rate of speed 2.

```
Processing time for the preparation of master batch
on dissolver:                                around 3 hours


Processing time for the preparation of master batch
on conventional mixer with sigma-wings:   around 4.5 hours
```

A reduced depolymerisation of the elastomer and a processing time which is reduced by 33% are thus obtained by the use of the process according to the invention compared to a conventional preparation on a usual mixer with sigma wings.

Example 2

The below master batch is prepared in a manner corresponding to the manner desribed in Example 1:

| Ingredient | Quantity/g | Composition in Percentages |
|---|---|---|
| Polyisobutylene | 950 | 19% |
| Polyvinylacetate | 1550 | 31% |
| Micro-crystalline wax | 2500 | 50% |
| Total | 5000 | 100% |

6

Example 3

The following master batch is prepared analogous to Example 1:

| Ingredient | Quantity/g | Composition in Percentages |
|---|---|---|
| Isoprene-isobutylene-copolymer | 1250 | 25% |
| Glycerolester of polymerised wood rosin | 1250 | 25% |
| Paraffin wax | 2500 | 50% |
| Total | 5000 | 100% |

Example 4

The following master batch is prepared analogous to Example 1:

| Ingredient | Quantity/g | Composition in percentages |
|---|---|---|
| Isoprene-isobutylene-copolymer | 1000 | 20% |
| Glycerolester of partially hydrogenated gum or wood rosin | 1200 | 24% |
| Micro-crystalline wax | 2800 | 56% |
| Total | 5000 | 100% |

Example 5

The below master batch is prepared analogously to Example 1:

| Ingredient | Quantity/g | Composition in percentage |
|---|---|---|
| Isoprene-isobutylene-copolymer | 1000 | 20% |
| Polyvinyl acetate | 1200 | 24% |
| Micro-crystalline wax | 2800 | 56% |
| Total | 5000 | 100% |

Example 6

Preparation of gum base

A gum base with the following composition is prepared:

| Ingredient | Quantity/g | Composition in percentages |
|---|---|---|
| Master batch according to Example 1 | 1000 | 20% |
| Low molecular weight polyisobutylene | 200 | 4% |
| Glycerol ester of partially hydrogenated gum rosin | 1100 | 22% |
| Polyvinyl acetate | 1100 | 22% |
| Mono/diglycerides | 100 | 2% |
| Hydrogenated fat | 150 | 3% |
| Micro-crystalline wax | 450 | 9% |
| Calcium carbonate | 900 | 18% |
| Total | 5000 | 100% |

The softener ingredients mono/diglycerides, cured fat and micro-crystalline wax are melted in a separate melting container by heating to 100°C under nitrogen, whereupon the elastomer polyisobutylene is added. Blending is carried out until a homogenous oleaginous liquid is formed. The softener and the elastomer is then led to the dissolver container and plasticizer and filler are added. Finally, the master batch is added in suitable small bits at room temperature.

The dissolver container is returned to its place under the mixing tools which are lowered into the container. The temperature of the mixer container is 120°C. Before the mixing tools are started, a vacuum of 60796 Pa below atmospheric pressure (-0.6 bar) is established, whereupon the mixing tools are started at the following rates of speed:

dissolver discs        2000 r.p.m.
kneading tools        150 r.p.m.
peripheral scraper        75 r.p.m.

After mixing for two minutes the rate of speed of the dissolver discs is increased to 3900 r.p.m. and after further four minutes of mixing the mixing tools are stopped. The pressure is increased to atmospheric pressure and the mixing tools are raised. The result is a homogenous gum base with an end temperature of 115°C. The gum base is then poured into so-called slabs or is divided into particles and cooled on commercially available process equipment. The total mixing time is thus six minutes.

After mixing for two minutes the mixing tools are stopped. The pressure is increased to normal atmospheric pressure and the mixing tools are raised. The end product is a homogenous gum base with a temperature of 100°C. The finished gum base may be processed according to the procedure described in Example 6. The total mixing time is thus two minutes.

A gum base prepared as described above displays the following typical viscosity date compared to a gum base prepared according to prior art, the measuring method being the same as described in Example 1:

Gum base prepared on dissolver:                    45-80 Pa.s


Gum base prepared on conventional
mixer with sigma wings:                            15-30 Pa.s


Processing time for preparation of
gum base on dissolver:                              2 minutes


Processing time for preparation of
gum base on conventional mixer with
sigma wings.                                        80 minutes


As appears from the above, a substantially reduced processing time with consequent economic and technological advantages, manifested in a substantially reduced decomposition of the elastomer, is obtained

Example 8

A gum base with the follwing composition is prepared:

| Ingredient | Quantity/g | Composition in percentages |
|---|---|---|
| Master batch according to Example 4 | 1000 | 20% |
| Low molecular weight polyisobutylene | 200 | 4% |
| Glycerol ester of polymerised gum rosin | 450 | 9% |
| Glycerol ester of partially hydrogenated gum rosin | 700 | 14% |
| Polyvinyl acetate | 1250 | 25% |
| Mono/diglycerides | 150 | 3% |
| Micro-crystalline wax | 100 | 2% |
| Hydrogenated fat | 250 | 5% |
| Calcium carbonate | 900 | 18% |
| Total | 5000 | 100% |


The softener ingredients mono/diglycerides, micro-crystals line wax and cured fat are charged in a separate melting container and melted by heating to 100°C covered by nitrogen. The master batch is added and mixing is carried out until a thick homogenous oleaginous fluid is formed. The mixture is discharged into the dissolver container and the other ingredients are added at room temperature.

The dissolver container is returned to its place under the mixing tools which are lowered into the container. The temperature of the mixing container is 120°C. The vacuum pump is activated and set to 60796 Pa below atmospheric pressure (-0.6 bar) . Then the mixing tools are started at the following rates of speed.

| | |
|---|---|
| dissolver discs | 2000 r.p.m. |
| kneading tools | 150 r.p.m. |
| peripheral scraper | 75 r.p.m. |

After mixing for one minutes the rate of speed of the dissolver discs is increased to 3900 r.p.m. and after further four minutes of mixing the mixing tools are stopped. The vacuum in the mixing chamber is increased to atmospheric pressure and the mixing tools are raised. The end product is a homogenous gum base with a temperature of 115°C. The gum base may be processed as described in Example 6. The total mixing time is thus five minutes.

A gum base prepared as described above displays the following typical viscosity data compared to a gum base prepared according to prior art:

```
Gum base prepared on dissolver:              39 Pa.s


Gum base prepared on conventional

mixer with sigma wings:                      22 Pa.s


Processing time for preparation of

gum base on dissolver:                       5 minutes


Processing time for preparation of

gum base on conventional mixer with

sigma wings.                                 80 minutes
```

Example 9

Preparation of gum base without the use of master batch

A gum base with the following composition is prepared:

| Ingredient | Quantity/g | Composition in percentages |
|---|---|---|
| Low molecular weight polyisobutylene | 250 | 5% |
| Glycerol ester of wood rosin | 750 | 15% |
| Polyvinyl acetate | 2500 | 50% |
| Mono/diglycerides | 50 | 1% |
| Hydrogenated fat | 300 | 6% |
| Triacetin | 200 | 4% |
| Talc | 950 | 19% |
| Total | 5000 | 100% |

The softener ingredients mono/diglycerides, cured fat and triacetin are charged into a separate melting container and melted by heating to 100°C. The elastomer is added and mixing is carried out until a homogenous, oleaginous fluid is formed. This mixture is kept heated to 100°C under nitrogen. The mixture is charged directly into the dissolver container, whereupon glycerol ester of rosin, polyvinyl acetate and talc are added.

The dissolver container is placed under the mixing tools which are lowered into the container. The temperature of the container is 120°C. Before starting the mixing tools a vacuum of 81062 Pa below atmospheric pressure (-0.8 bar) is established and the mixing tools are started at the following rates of speed:

dissolver discs          3900 r.p.m.
kneading tools          150 r.p.m.
peripheral scraper      75 r.p.m.

After mixing for 15 minutes the mixing tools are stopped. The pressure is increased to normal atmospheric pressure. The mixing tools are raised and a gum base with a conventional fibrous structure is seen having a temperature of 98°C. The gum base may subsequently be poured into slabs or be cooled and divided into particles on commercially available equipment. The total mixing time is thus 15 minutes.

Example 10

Preparation of chewing gum

A chewing gum having the following composition is prepared:

| Ingredient | Quantity/g | Composition in percentages |
|---|---|---|
| Gum base according to Example 6 | 1100 | 22.0% |
| Sugar | 3000 | 60.0% |
| Glucose syrup | 800 | 16.0% |
| Liquid lecithin | 20 | 0.4% |
| Glycerol | 40 | 0.8% |
| Flavouring agents | 40 | 0.8% |
| Total | 5000 | 100.0% |

The gum base, in a liquid form, is charged in the dissolver container, which is preheated to 60°C, whereupon glucose syrup is added. 1/3 of the sugar quantity as well as flavouring agents and glycerol are added.

The container is then placed under the mixing tools which are lowered thereinto. The mixing process can now be started, the mixing tools being set at the following rates of speed:

dissolver discs          700 r.p.m.
kneading tools          150 r.p.m.
peripheral scraper      75 r.p.m.

After one minute the rest of the sugar is added and after three minutes of mixing a homogenous chewing gum mass with a temperature of 58°C is obtained.

Processing time for chewing gum prepared
according to the invention:                    about 3 minutes

Processing time for the preparation
of chewing gum by conventional process
in mixer with sigma mixing wings:         about 25 minutes

In addition to a reduction of the processing time in the order of 90%, a more elastic consistency in the chewing gum is obtained because of the shorter duration of the mechanical effect on the chewing gum mass by using fluid gum base and simultaneously processing the chewing gum mass for very short time.

Example 11

A chewing gum having the following composition is prepared

| Ingredient | Quantity/g | Composition in percentages |
|---|---|---|
| Gum base according to Example 6 | 1000 | 20.0% |
| Sugar | 3000 | 60.0% |
| Glucose syrup | 950 | 19.0% |
| Liquid sorbitol (70%) | 25 | 0.5% |
| Flavouring agents | 25 | 0.5% |
| Total | 5000 | 100.0% |

The preparation is carried out in a manner corresponding to Example 10 above.

Example 12

A sugarless chewing gum having the following composition is prepared:

| Ingredient | Quantity/g | Composition in percentages |
|---|---|---|
| Gum base according to Example 8 | 1500 | 30% |
| Sorbitol | 1750 | 35% |
| Xylitol | 1050 | 21% |
| Lycasin TM 80/55 | 500 | 10% |
| Glycerol | 75 | 1.5% |
| Lecithin | 25 | 0.5% |
| Flavouring agent | 100 | 2% |
| Total | 5000 | 100% |

The preparation is carried out analogously to Example 10 above.

Organoleptic evaluation of chewing gum

To compare a chewing gum containing a gum base prepared according to the invention and a chewing gum according to prior art, an organoleptic evaluation was carried out of a chewing gum containing a gum base according to Example 6 or 8 and of an analogous chewing gum containing a gum base prepared according to prior art.

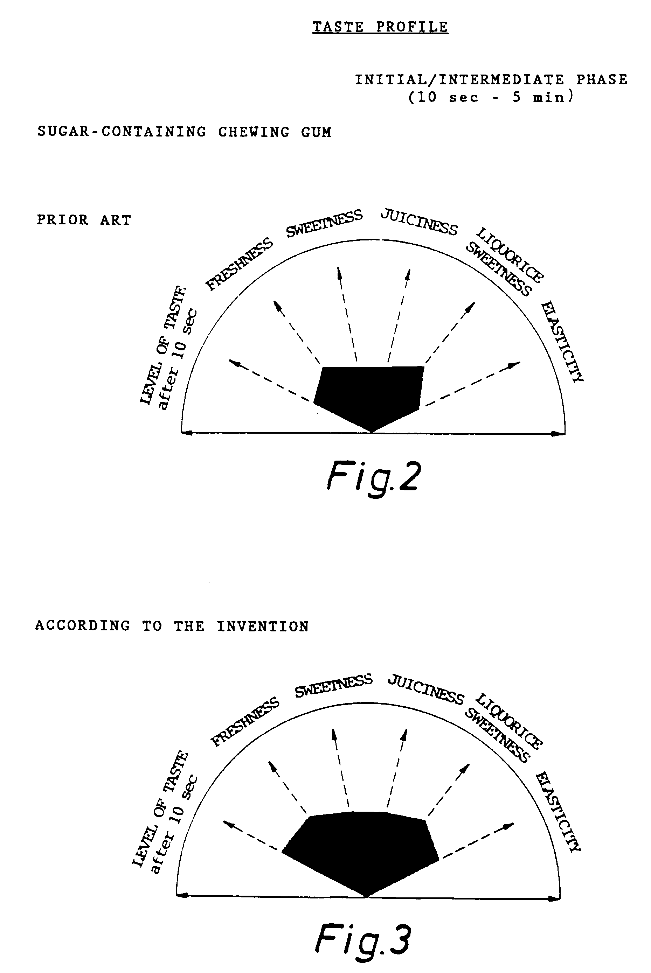

Figs. 2-5 illustrate taste profiles of sugar sweetened dragees, divided into initial/intermediate phase and end phase.

The taste evaluations were undertaken by a tasting panel and the organoleptic evaluation was carried out according to the conventional evaluation method for chewing gum, i.e. an organoleptic evaluation in which the chewing period is divided into three phases designated:

- initial phase - 0 to 10 seconds,
- intermediate phase - 10 seconds to 5 minutes and until the sweetener has been chewed out, usually after about 3 minutes,
- end phase - from the sweetener has been chewed out and until the chewing gum is discarded.

The results are plotted on a semicircular diagram where the distance from the centre of the circle to the given point indicates an intensity value. As a result, a graphic illustration of the complicated factors is obtained where the area filled out in the diagram represents a measurement of the taste intensity.

As appears from a comparison of Figs. 2 and 3, the taste sets in on a higher level and a greater taste release is therefore perceived from the start. Furthermore the chewing gum containing a gum base prepared according to the invention releases a greater freshness during the chewing and thereby also provides a greater mouth freshness. In addition to this, the sweetness and juiciness of the chewing gum have been improved which provides a good back-up to the increased taste level and the freshness. The chewing gum also releases liquorice with a greater sweetness intensity which is escpecially perceived from after about 2 minutes and until the chewing gum is spit out. Finally, the consistency of the chewing gum is more elastic and resilient and the chewing gum is therefore perceived as a more exciting piece of chewing gum to chew.

To sum up, the taste level of the initial and intermediate phase is generally increased and an increase of sweetness and juiciness is also seen.

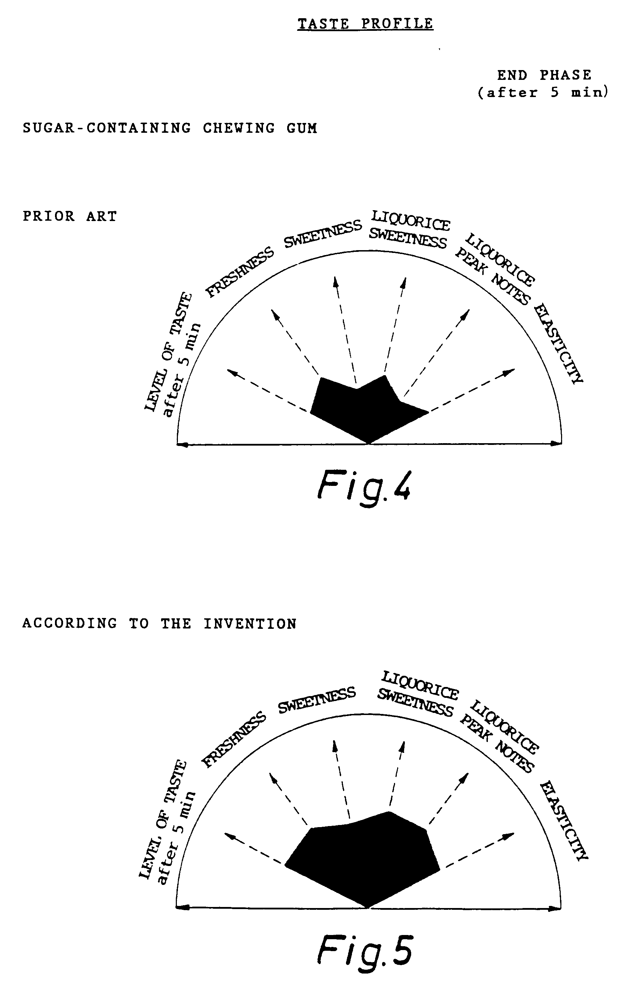

As appears from Figs. 4 and 5, the same pattern is seen in the end phase for level of end taste, freshness, sweetness. liquorice sweetness and peak notes. The chewing consistency is also permanently perceived as more elastic in the end phase in the chewing gum containing a gum base prepared according to the invention compared to chewing gum according to prior art.

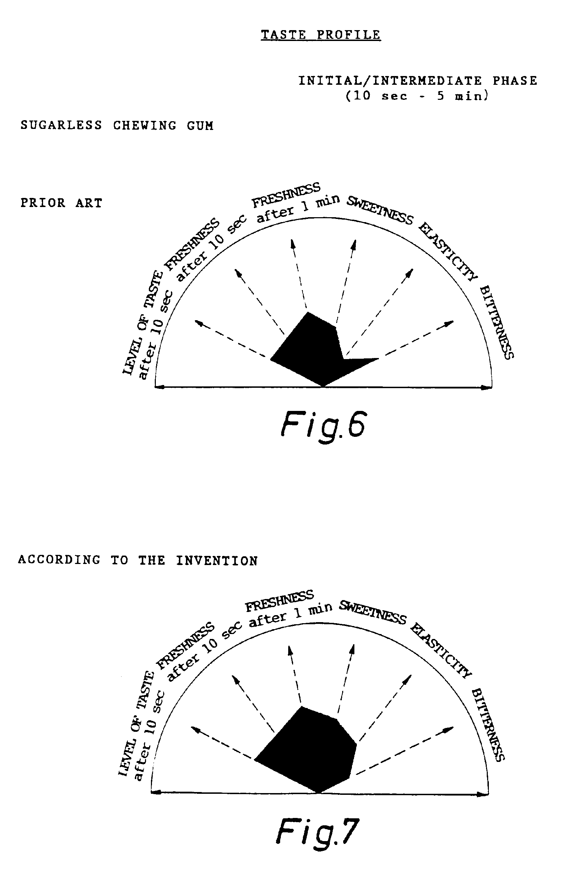

A organoleptic evaluation of a sugarless dragee was further carried out, cf. figs. 6-9.

As appears from a comparison of Figs. 6 and 7, the taste sets in at a higher level in the chewing gum containing a gum base prepared according to the invention and the taste is thereby perceived as being more intense. Furthermore, the taste is released with a greater freshness and the freshness is also perceived as more intense already from the initial phase and continues to give a fresher taste. An increased level of sweetness is also perceived which gives a good back-up to the increased level of taste. Further, the chewing gum is perceived as being more elastic than a chewing gum containing a gum base prepared according to prior art and the bitterness from sweeteners, such as sorbitol, and from liquorice are perceived to be less.

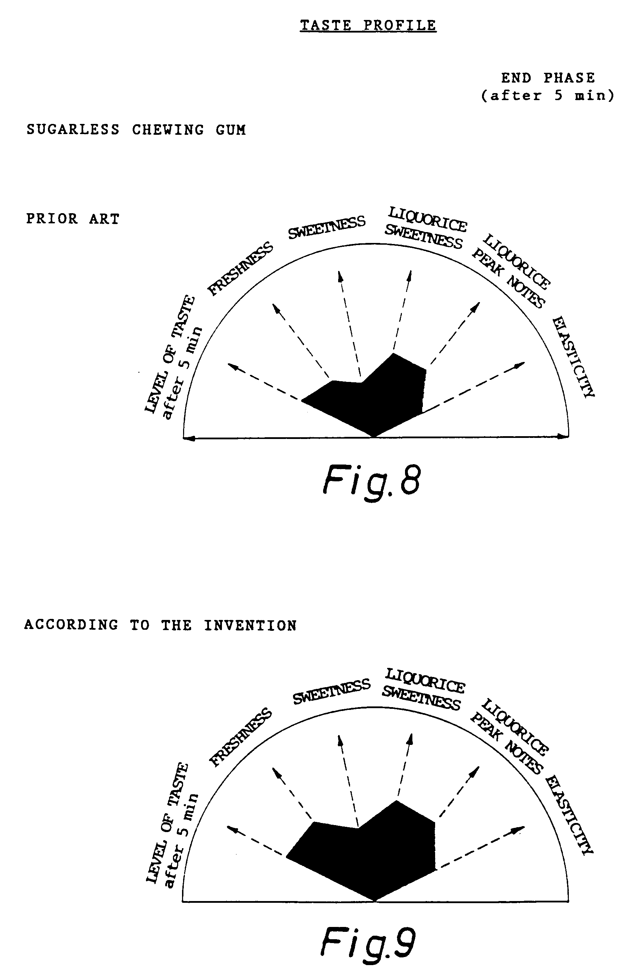

When comparing Figs. 8 and 9 it is seen that also in the end phase a higher level of taste is observed. The freshness is still greater and sweetness, liquorice sweetness and liquorice peak notes have also been increased in the chewing gum containing a gum base prepared according to the invention. Finally, the product is perceived as having a greater elasticity.

It will be obvious that the above specification only comprises preferred embodiments of the invention and that many variations and modifications may be made thereof without thereby deviating from the scope of the invention. Thus, other planet mixers than the preferably used dissolver described may be used and the same may be used to prepare chewing gum containing gum base prepared in any suitable way.

## Claims

1. Process for the preparation of gum base for chewing gum on the basis of two or more of the ingredients elastomer, plasticizer, softener and filler and optionally various auxiliary agents, **characterised** by
   1) melting the softener by heating to a temperature in the range of 80 to 130°C,
   2) adding elastomer and optionally additional gum base ingredients to the melted softener ingredient, and
   3) subjecting the resulting material to a high intensity mixing under high shear conditions in a planet mixer,
   whereupon additional gum base ingredients in solid or melted form are optionally added under continued high shear conditions.

2. Process as claimed in claim 1, **characterised** by the elastomer being softened by heating to a temperature in the range of 75 to 150°C before being added to the melted softener ingredient.

3. Process as claimed in claim 1, **characterised** by the planet mixer comprising two circular dissolver discs, a kneading tool and a peripheral scraper.

4. Process as claimed in claim 3, **characterised** in that the dissolver discs work at a speed of 500-6000 r.p.m., the kneading tool at a speed of 30 to 200 r.p.m. and the peripheral scraper at a speed of 15 to 100 r.p.m..

5. Process as claimed in claim 1, **characterised** by the elastomer being selected among hevea brasiliensis, polyisobutylene , isoprene-isobutylene copolymer, styrene-butadiene-copolymer, chicle, jelutong, sorva, sorvinha, niger gutta, gutta hang kang and masseranduba balata.

6. Process as claimed in claim 1, **characterised** in that before being added to the melted softener ingredient the elastomer is divided into a particle size not exceeding 25 mm, preferably not exceeding about 12 mm.

7. Process as claimed in claim 1, **characterised** in that the softener ingredient is selected among rice bran wax, micro-crystalline wax, paraffin wax, bees' wax, candelilla wax, polyethylene wax, synthetic paraffin wax, petroleum wax, lanolin, pork fat, suet, raw/partially/completely hydrogenated soya bean oil, coconut oil, palm oil, rape seed oil, peanut oil, shea seed oil, corn oil, cotton seed oil, sunflower oil, mono/diglycerides, esterified mono/diglycerides, sugar esters and triacetin.

8. Process as claimed in claim 1, **characterised** in that the plasticizer is selected among glycerol esters of partially hydrogenated wood or gum rosin, of partially dimerised rosin or of polymerised rosin or of wood, gum or tall oil rosin, methyl esters of partially hydrogenated rosin, pentaerythritol esters of partially hydrogenated wood or gum rosin, pentaerythritol esters of gum or wood rosin, terpene resin containing $\alpha/\beta$-pinene and/or dipentene, terpene resin containing delta limonene and polyvinyl acetate resins having a molecular weight of at least 2000, polyvinyl alcohol, vinyl acetate and vinyl laurate copolymer.

9. Process as claimed in claim 1, **characterised** by the filler being selected among calcium carbonate, talc, kaolin, aluminum oxide and silicon oxide.

10. Process as claimed in claim 1, **characterised** in that the auxiliary agents are selected among antioxidants, including butyl hydroxyanisole, butylhydroxytoluene, propyl gallate and tocopherols, inorganic or organic colourants and sodium stearate, potassium stearate and sodium sulphide.

11. Process as claimed in claim 1, **characterised** in that 2 to 30 weight% elastomer, 5 to 75 weight% plasticizer, 4 to 65 weight% softener, 0 to 60 weight% filler and 0 to 20 weight% auxiliary agents are used calculated on the final gum base.

12. The use of gum base prepared by the process according to claim 1 for the preparation of chewing gum in a planet mixer by mixing the gum base with conventional chewing gum ingredients, such as one or more sweeteners, flavourings and optionally further additives.

13. Product prepared by the process as claimed in any of the preceding claims 1 to 11.


**Patentansprüche**

1. Verfahren zur Herstellung von Gummigrundmasse für Kaugummi auf der Basis von zwei oder mehreren der Bestandteile Elastomer, Plastifizierungsmittel, Weichmacher und Füllmittel und gegebenfalls verschiedenen Hilfsmitteln,
   **gekennzeichnet durch**
   1) Schmelzen des Weichmachers durch Erhitzen auf eine Temperatur im Bereich von 80 bis 130°C;
   2) Zugeben von Elastomer und gegebenenfalls zusätzlichen Bestandteilen der Gummigrundmasse zum geschmolzenen Weichmacher-Bestandteil und
   3) Aussetzen des resultierenden Materials einem Vermischen mit hoher Intensität unter Bedingungen mit starker Scherung in einem Planetenmischer,
   worauf zusätzliche Bestandteile der Gummigrundmasse in fester oder geschmolzener Form unter Bedingungen mit fortgesetzter starker Scherung gegebenenfalls zugegeben werden.

2. Verfahren nach Anspruch 1, **dadurch gekennzeichnet,** daß das Elastomer durch Erhitzen auf eine Temperatur im Bereich von 75 bis 150°C erweicht wird, bevor man es dem geschmolzenen Weichmacher-Bestandteil zugibt.

3. Verfahren nach Anspruch 1, **dadurch gekennzeichnet,** daß der Planetenmischer zwei kreisförmige Auflöserscheiben, ein Knetgerät und einen peripheren Schaber enthält.

4. Verfahren nach Anspruch 3, **dadurch gekennzeichnet,** daß die Auflöserscheiben mit einer Geschwindigkeit von 500 bis 6000 Upm, das Knetgerät mit einer Geschwindigkeit von 30 bis 200 Upm und der periphere Schaber mit einer Geschwindigkeit von 15 bis 100 Upm arbeiten.

5. Verfahren nach Anspruch 1, **dadurch gekennzeichnet,** daß das Elastomer aus Hevea brasiliensis, Polyisobutylen, Isopren-Isobutylen-Copolymer, Styrol-ButadienCopolymer, Chicle, Djelutung, Sorva, Sorvinha, Niger-Gutta, Gutta-Hangkang und Masseranduba-Balata ausgewählt wird.

6. Verfahren nach Anspruch 1, **dadurch gekennzeichnet,** daß das Elastomer auf eine Teilchengröße von nicht mehr als 25 mm, vorzugsweise nicht mehr als etwa 12 mm zerkleinert wird, bevor man es dem geschmolzenen Weichmacher-Bestandteil zusetzt.

7. Verfahren nach Anspruch 1, **dadurch gekennzeichnet,** daß der Weichmacher-Bestandteil aus Reiskleiewachs, mikrokristallinem Wachs, Paraffinwachs, Bienenwachs, Kandelillawachs, Polyethylenwachs, synthetischem Paraffinwachs, Petroleumwachs, Lanolin, Schweinefett, Talg, rohem/teilweise hydriertem/vollständig hydriertem Sojabohnenöl, Kokosöl, Palmöl, Rapskernöl, Erdnußöl, Schisamennöl, Maisöl, Baumwollsamenöl, Sonnenblumenöl, Mono/Diglyceriden, veresterten Mono/Diglyceriden, Zuckerestern und Triacetin ausgewählt wird.

8. Verfahren nach Anspruch 1, **dadurch gekennzeichnet,** daß das Plastifizierungsmittel aus Glycerinestern von teilweise hydriertem Holz- oder Gummirosinharz, aus teilweise dimerisiertem Rosinharz oder aus polymerisiertem Rosinharz oder aus Holz-, Gummi- oder Tallölrosinharz, Methylestern von teilweise hydriertem Rosinharz, Pentaerythritolestern von teilweise hydriertem Gummi- oder Holzrosinharz, Pentaerythritolestern von Gummi- oder Holzrosinharz, α/ß-Pinen und/oder Dipenten haltigem Terpenharz, Delta-Limonen haltigem Terpenharz und Polyvinylacetatharzen mit einem Molekulargewicht von mindestens 2000, Polyvinylalkohol, Vinylacetat-und Vinyllaurat-Copolymer ausgewählt wird.

9. Verfahren nach Anspruch 1, **dadurch gekennzeichnet,** daß das Füllmittel aus Calciumcarbonat, Talk, Kaolin, Aluminiumoxid und Siliziumoxid ausgewählt wird.

10. Verfahren nach Anspruch 1, **dadurch gekennzeichnet,** daß die Hilfsmittel aus Antioxidantien einschließlich Butylhydroxyanisol, Butylhydroxytoluol, Propylgallat und Tocopherolen, anorganischen oder organischen Färbemitteln und Natriumstearat, Kaliumstearat und Natriumsulfid ausgewählt werden.

11. Verfahren nach Anspruch 1, **dadurch gekennzeichnet,** daß 2 bis 30 Gew.-% Elastomer, 5 bis 75 Gew.-% Plastifizierungsmittel, 4 bis 65 Gew.-% Weichmacher, 0 bis 60 Gew.-% Füllmittel und 0 bis 20 Gew.-% Hilfsmittel bezogen auf die fertige Gummigrundmasse verwendet werden.

12. Verwendung von Gummigrundmasse, die durch das Verfahren nach Anspruch 1 hergestellt ist, für die Herstellung von Kaugummi in einem Planetenmischer, indem man die Gummigrundmasse mit üblichen Kaugummi-Bestandteilen, wie etwa einem oder mehreren Süßstoffen, Geschmacksstoffen und gegebenfalls weiteren Additiven vermischt.

13. Produkt, hergestellt durch das Verfahren nach einem der vorhergehenden Ansprüche 1 bis 11.

## Revendications

1. Procédé de préparation d'une base de gomme destinée à une gomme à mâcher à base de deux ou plusieurs des ingrédients suivants : élastomère, plastifiant, émollient et charge et, facultativement, divers adjuvants, caractérisé en ce que

    1) on fait fondre l'émollient par chauffage à une température comprise dans la plage de 80 à 130°C,

    2) on ajoute l'élastomère et, facultativement, des ingrédients additionnels de base de gomme à l'ingrédient émollient fondu et

    3) on soumet la substance obtenue à un mélange haute intensité dans des conditions de cisaillement élevé dans un mélangeur à mouvement planétaire,

après quoi on ajoute facultativement des ingrédients additionnels de base de gomme sous forme solide ou fondue avec maintien des conditions de cisaillement élevé.

2. Procédé selon la revendication 1, caractérisé en ce que l'élastomère est amolli par chauffage à une température comprise dans la plage de 75 à 150°C avant d'être ajouté à l'ingrédient émollient fondu.

3. Procédé selon la revendication 1, caractérisé en ce que le mélangeur à mouvement planétaire comprend deux disques dissolvants circulaires, un outil de malaxage et une racle périphérique.

4. Procédé selon la revendication 3, caractérisé en ce que les disques dissolvants fonctionnent à une vitesse de 500 à 6 000 tr/min, l'outil de malaxage à une vitesse de 30 à 200tr/min et la racle périphérique à une vitesse de 15 à 100 tr/min.

5. Procédé selon la revendication 1, caractérisé en ce que l'élastomère est sélectionné parmi les subtances suivantes : hévéa du brésil, polyisobutylène, copolymère isoprène-isobutylène, copolymère styrène-butadiène, chiclé, jélutong, sorva, sorvinha, niger gutta, guttat hang kang et masseranduba balata.

6. Procédé selon la revendication 1, caractérisé en ce qu'avant son addition à l'ingrédient émollient fondu, l'élastomère est divisé en particules de dimensions inférieures ou égales à 25 mm, de préférence à environ 12 mm.

7. Procédé selon la revendication 1, caractérisé en ce que l'ingrédient émollient est sélectionné parmi la cire de son de riz, la cire microcristalline, la cire de paraffine, la cire d'abeilles, la cire de candellila, la cire de polyéthylène, la cire de paraffine synthétique, la cire de pétrole, la lanoline, la graisse de porc, la graisse de rognon, l'huile de soja brute/partiellement hydrogénée/totalement hydrogénée, l'huile de coco, l'huile de palme, l'huile de colza, l'huile d'arachide, le beurre de karité, l'huile de maïs, l'huile de coton, l'huile de toumesol, des mono/diglycérides, des mono/diglycérides estérifiés, des esters de sucre et la triacétine.

8. Procédé selon la revendication 1, caractérisé en ce que le plastifiant est sélectionné parmi les esters de glycérol de résine de térébenthine ou de colophane gomme partiellement hydrogénées, de colophane partiellement dimérisée ou de colophane polymérisée ou de résine de térébenthine, de colophane gomme ou de colophane de tallol, les esters de méthyle de colophane partiellement hydrogénées, les esters de pentaérythritol de résine de térébenthine ou de colophane gomme partiellement hydrogénées, les esters de pentaérythritol de colophane gomme ou de résine de térébenthine, une résine terpénique contenant des α/β-pinènes et/ou des dipentènes, une résine terpénique contenant des δ-limonènes et des résines de poly(acétate de vinyle) ayant un poids moléculaire supérieur ou égal à 2 000, l'alcool polyvinylique, le copolymère d'acétate de vinyle et de laurate de vinyle.

9. Procédé selon la revendication 1, caractérisé en ce que la charge est sélectionnée parmi le carbonate de calcium, le talc, le kaolin, l'oxyde d'aluminium et l'oxyde de silicium.

10. Procédé selon la revendication 1, caractérisé en ce que les adjuvants sont sélectionnés parmi les antioxydants, dont le butylhydroxyanisole, le butylhydroxytoluène, le gallate de propyle et les tocophérols, les colorants inorganiques ou organiques et le stéarate de sodium, le stéarate de potassium et le sulfure de sodium.

11. Procédé selon la revendication 1, caractérisé en ce qu'on utilise 2 à 30 % en poids d'élastomère, 5 à 75 % en poids de plastifiant, 4 à 65 % en poids d'émollient, 0 à 60 % en poids de charge et 0 à 20 % en poids d'adjuvants par rapport à la base de gomme finale.

12. Emploi d'une base de gomme préparée par le procédé selon la revendication 1 pour la préparation d'une gomme à mâcher dans un mélangeur à mouvement planétaire, par mélange de la base de gomme avec des ingrédients conventionnels de gomme à mâcher tels qu'un ou plusieurs édulcorants, aromates et d'autres additifs éventuels.

13. Produit préparé par le procédé selon l'une quelconque des revendications précédentes 1 à 11.

Fig.1

TASTE PROFILE

INITIAL/INTERMEDIATE PHASE
(10 sec - 5 min)

SUGAR-CONTAINING CHEWING GUM

PRIOR ART

*Fig.2*

ACCORDING TO THE INVENTION

*Fig.3*

## TASTE PROFILE

END PHASE
(after 5 min)

SUGAR-CONTAINING CHEWING GUM

PRIOR ART

*Fig.4*

ACCORDING TO THE INVENTION

*Fig.5*

TASTE PROFILE

INITIAL/INTERMEDIATE PHASE
(10 sec - 5 min)

SUGARLESS CHEWING GUM

PRIOR ART

Fig.6

ACCORDING TO THE INVENTION

Fig.7

TASTE PROFILE

END PHASE
(after 5 min)

SUGARLESS CHEWING GUM

PRIOR ART

*Fig.8*

ACCORDING TO THE INVENTION

*Fig.9*